# EUROPÄISCHE PATENTANMELDUNG

(11) **EP 3 822 545 A1**
(43) Veröffentlichungstag der Anmeldung: **19.05.2021**
(21) Anmeldenummer: 20206845.8
(22) Anmeldetag: 11.11.2020
(51) Int. Cl.: F24D 19/10, F24D 3/18, F25B 25/00, F25B 30/02, F25B 49/00

(54) **VERFAHREN ZUM BETRIEB EINER WÄRMEPUMPE**

(30) Priorität: 15.11.2019 DE 102019130932
(71) Anmelder: Viessmann Werke GmbH & Co. KG, 35108 Allendorf (DE)
(72) Erfinder: Immel, Markus, 35075 Gladenbach (DE); Vaupel, Manfred, 35066 Frankenberg (DE)
(74) Vertreter: Wolf, Michael

(57) **Zusammenfassung**

Die Erfindung betrifft ein Verfahren zum Betrieb einer Wärmepumpe, bei dem eine Primärseite (1.1) eines Wärmeübertragers (1) der Wärmepumpe von einem Kältemittel durchströmt wird, bei dem eine Sekundärseite (1.2) des Wärmeübertragers (1) der Wärmepumpe von einem Heizkreismedium durchströmt wird, bei dem das Heizkreismedium in einem einen Vorlauf- (2.2) und einen Rücklaufzweig (2.1) aufweisenden Heizkreis (2) eines Gebäudes nach Bedarf gefördert wird, bei dem mit einem Drucksensor (3) der Druck des Heizkreismediums im Heizkreis (2) gemessen wird und bei dem eine Strömung des Heizkreismediums mit einem Ventil (4.1) im Rücklauf- (2.1) und mit einem Ventil (4.2) im Vorlaufzweig (2.2) unterbrochen werden kann. Nach der Erfindung ist vorgesehen, dass die beiden Ventile (4.1, 4.2) geschlossen werden, wenn im Heizkreis (2) mit dem Drucksensor (3) ein oberhalb eines vorgegebenen Schwellwertes liegender Druck des Heizkreismediums gemessen wird.

## Beschreibung

Die Erfindung betrifft ein Verfahren zum Betrieb einer Wärmepumpe gemäß dem Oberbegriff des Patentanspruchs 1.

Ein Verfahren der eingangs genannten Art ist aus dem Patentdokument DE 10 2011 011 210 A1 bekannt. Bei diesem wird eine Primärseite eines Wärmeübertragers der Wärmepumpe von einem Kältemittel und eine Sekundärseite des Wärmeübertragers der Wärmepumpe von einem Heizkreismedium durchströmt. Ferner wird das Heizkreismedium in einem einen Vorlauf- und einen Rücklaufzweig aufweisenden Heizkreis eines Gebäudes nach Bedarf gefördert, wobei mit einem Drucksensor der Druck des Heizkreismediums im Heizkreis gemessen wird. Bei alledem kann eine Strömung des Heizkreismediums mit einem Ventil im Vorlauf- und mit einem Ventil im Rücklaufzweig unterbrochen werden.

Der Erfindung liegt die Aufgabe zugrunde, ein Verfahren der eingangs genannten Art zu verbessern. Insbesondere soll ein Verfahren geschaffen werden, bei dem auch mit einem brennbaren Kältemittel betriebene Wärmepumpen im Falle eines Schadens am Wärmeübertrager sicher betrieben werden können.

Diese Aufgabe ist mit mit einem Verfahren der eingangs genannten Art durch die im Kennzeichen des Patentanspruchs 1 aufgeführten Merkmale gelöst.

Nach der Erfindung ist also vorgesehen, dass die beiden Ventile geschlossen werden, wenn im Heizkreis mit dem Drucksensor ein oberhalb eines vorgegebenen Schwellwertes liegender Druck des Heizkreismediums gemessen wird.

Mit anderen Worten zeichnet sich die erfindungsgemäße Lösung somit dadurch aus, dass ein Schaden am Wärmeübertrager, typischerweise ein sogenannter Plattenwärmetauscher, und zwar insbesondere in Form eines Loches zwischen seiner Primär- und seiner Sekundärseite per Druckmessung im Heizkreis festgestellt wird und dass dann (im Falle eines Schadens) mit Hilfe der Ventile eine weitere Durchströmung des Heizkreises komplett unterbunden wird, um zu vermeiden, dass brennbares Wärmeträgermedium aus dem Wärmepumpenkreis in den Heizkreis und damit, falls die Wärmepumpe selbst im Freien aufgestellt sein sollte, in ein Gebäude gelangt. Wie oben angedeutet, werden bei dem erfindungsgemäßen Verfahren bevorzugt Wärmeübertrager verwendet, deren Primär- und Sekundärseite durch ein einfaches, festes und wärmeleitendes Element - wie zum Beispiel eine feste Wandung, eine Membran oder Ähnliches - voneinander getrennt sind, sodass Wärme möglichst unmittelbar von der Primär- auf die Sekundärseite des Wärmeübertragers oder anders herum übertragen wird, ohne dass eine weitere, zwischengelagerte Fluidführung notwendig ist.

Andere vorteilhafte Weiterbildungen ergeben sich aus den abhängigen Patentansprüchen.

Das erfindungsgemäße Verfahren einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

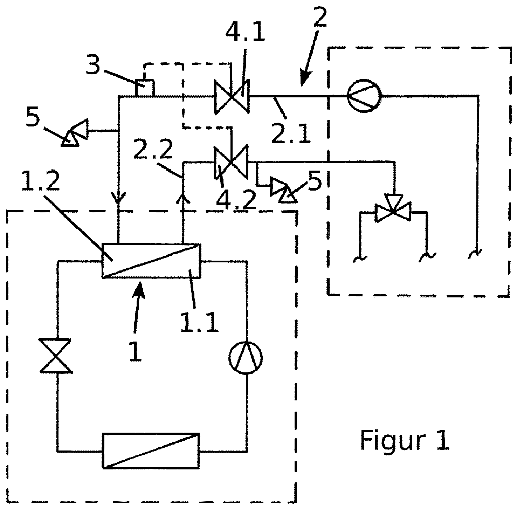

Es zeigt schematisch
- Figur 1: eine über einen Heizkreis mit einem Gebäude in Verbindung stehende Wärmepumpe.

Das in der einzigen Figur 1 dargestellte Schema dient zur Erläuterung des erfindungsgemäßen Verfahrens zum Betrieb einer Wärmepumpe, bei dem eine Primärseite 1.1 eines Wärmeübertragers 1 der Wärmepumpe von einem Kältemittel durchströmt wird, bei dem eine Sekundärseite 1.2 des Wärmeübertragers 1 der Wärmepumpe von einem Heizkreismedium durchströmt wird, bei dem das Heizkreismedium in einem einen Vorlauf- 2.2 und einen Rücklaufzweig 2.1 aufweisenden Heizkreis 2 eines Gebäudes nach Bedarf gefördert wird, bei dem mit einem Drucksensor 3 der Druck des Heizkreismediums im Heizkreis 2 gemessen wird und bei dem eine Strömung des Heizkreismediums mit einem Ventil 4.1 im Rücklauf- 2.1 und mit einem Ventil 4.2 im Vorlaufzweig 2.2 unterbrochen werden kann.

In Figur 1 ist dabei die Wärmepumpe durch den linken und das Gebäude durch den rechten, gestrichelten Kasten angedeutet. Außerdem ist dabei, wie ersichtlich, bevorzugt vorgesehen, dass die Wärmepumpe mit dem Wärmeübertrager 1 außerhalb des Gebäudes betrieben wird. Ferner ist bevorzugt vorgesehen, dass der mit dem Wärmeübertrager 1 verbundene Heizkreis 2 sowohl im als auch außerhalb des Gebäudes betrieben wird.

Weiterhin ist bevorzugt vorgesehen, dass wahlweise die Primärseite 1.1 des Wärmeübertragers 1 bei Betrieb der Wärmepumpe vom Kältemittel mit einem Druck von mindestens 5 bar und/oder die Sekundärseite 1.2 des Wärmeübertragers 1 bei Betrieb der Wärmepumpe vom Heizkreismedium mit einem Druck unter 3 bar durchströmt wird.

Wesentlich für das erfindungsgemäße Verfahren ist nun, dass die beiden Ventile 4.1, 4.2 geschlossen werden, wenn im Heizkreis 2 mit dem Drucksensor 3 ein oberhalb eines vorgegebenen Schwellwertes liegender Druck des Heizkreismediums gemessen wird.

Noch etwas genauer betrachtet, ist dabei besonders bevorzugt vorgesehen, dass bereits eine kurzzeitige, den Schwellwert erreichende Druckspitze im Heizkreis 2 dazu führt, dass die Ventile 4.1, 4.2 geschlossen werden.

Ganz konkret betrachtet, ist besonders bevorzugt vorgesehen, dass die beiden Ventile 4.1, 4.2 geschlossen werden, wenn der mit dem Drucksensor 3 gemessene Schwellwert größer als 4 bar ist.

Dabei ist weiterhin besonders bevorzugt vorgesehen, dass der Druck des Heizkreismediums mit dem Drucksensor 3 (wie in Figur 1 dargestellt) benachbart zum Wärmeübertrager 1 und vorzugsweise im Rücklaufzweig 2.1 gemessen wird.

Außerdem ist besonders bevorzugt vorgesehen, dass die beiden Ventile 4.1, 4.2, sobald sie verschlossen sind, von selbst und stromlos geschlossen bleiben.

Weiterhin ist ganz besonders bevorzugt vorgesehen, dass zum Abbau eines (nicht unbedingt von einem Schaden am Wärmeübertrager herrührenden) Überdrucks im Heizkreis 2 mindestens ein Sicherheitsventil 5 verwendet wird. Noch genauer betrachtet, ist dabei bevorzugt vorgesehen, dass ein Sicherheitsventil 5 im Rücklaufzweig 2.1 (angeordnet zwischen dem Ventil 4.1 und dem Wärmeübertrager 1 und ein Sicherheitsventil 5 (angeordnet zwischen dem Ventil 4.2 und dem Gebäude) im Vorlaufzweig 2.2 verwendet wird.

Damit gegebenenfalls mit brennbarem Kältemittel verunreinigtes Heizkreismedium nicht ins Innere des vorgenannten Gebäudes gelangen kann, ist ferner, wie dargestellt, besonders bevorzugt vorgesehen, dass das Sicherheitsventil 5 bzw. die Sicherheitsventile 5 außerhalb des Gebäudes betrieben wird bzw. werden.

Bezüglich des besagten Sicherheitsventils 5 bzw. der besagten Sicherheitsventile 5 ist dabei weiterhin besonders bevorzugt vorgesehen, dass dieses bzw. diese erst bei einem länger anhaltenden Druck von über 3 bar öffnet bzw. öffnen. Nochmals genauer im Vergleich betrachtet, ist dabei schließlich besonders bevorzugt vorgesehen, dass die Ventile 4.1, 4.2 bereits auf eine Druckspitze im Heizkreis 2 reagieren, das Sicherheitsventil 5 aber erst auf eine länger anhaltende Druckveränderung im Heizkreis reagiert.

Das erfindungsgemäße Verfahren funktioniert wie folgt:
Beim regulären Betrieb der Wärmepumpe herrscht auf der Primärseite 1.1 des Wärmeübertragers 1, im Kältemittelkreis ein hoher Druck von beispielsweise 10 bar. Auf der Sekundärseite 1.2, im Heizkreis 2, herrscht hingegen ein niedrigerer Druck von beispielsweise 2 bar. In diesem Zustand sind die Ventile 4.1 und 4.2 geöffnet und die Sicherheitsventile 5 geschlossen.

Tritt nun ein Schaden am Wärmeübertrager 1 auf und tritt dadurch Kältemittel in den Heizkreis 2 ein, so entsteht hierdurch ein Druckanstieg im Heizkreis 2, welcher vom Drucksensor 3 detektiert wird. Ist der Druckanstieg so stark, dass ein zuvor vorgegebener Schwellwert (zum Beispiel 4 bar) auch nur kurz überschritten wird, so werden die Ventile 4.1 und 4.2 im Vorlauf- 2.2 und Rücklaufzweig 2.1 des Heizkreises 2 geschlossen, so dass das Kältemittel nicht weiter über den Heizkreis 2 in ein über diesen mit der Wärmepumpe verbundenes Gebäude gelangen kann.

Sollte des Weiteren über einen längeren Zeitraum vom Drucksensor 3 ein erhöhter Druck im Heizkreis 2 gemessen werden, werden die Sicherheitsventile 5 geöffnet, um möglicherweise im Heizkreis 5 befindliches Kältemittel an die Umgebung abzulassen und ein ungeplantes Eintreten von Kältemittel in ein Gebäude zu vermeiden.

Ein solches Verfahren führt zu einem besonders sicheren Betrieb von Wärmepumpen, welche brennbare oder explosive Kältemittel verwenden.

### Bezugszeichenliste

- 1: Wärmeübertrager
- 1.1: Primärseite
- 1.2: Sekundärseite
- 2: Heizkreis
- 2.1: Rücklaufzweig
- 2.2: Vorlaufzweig
- 3: Drucksensor
- 4.1: Ventil im Rücklaufzweig
- 4.2: Ventil im Vorlaufzweig
- 5: Sicherheitsventil

## Patentansprüche

1. Verfahren zum Betrieb einer Wärmepumpe, bei dem eine Primärseite (1.1) eines Wärmeübertragers (1) der Wärmepumpe von einem Kältemittel durchströmt wird, bei dem eine Sekundärseite (1.2) des Wärmeübertragers (1) der Wärmepumpe von einem Heizkreismedium durchströmt wird, bei dem das Heizkreismedium in einem einen Vorlauf- (2.2) und einen Rücklaufzweig (2.1) aufweisenden Heizkreis (2) eines Gebäudes nach Bedarf gefördert wird, bei dem mit einem Drucksensor (3) der Druck des Heizkreismediums im Heizkreis (2) gemessen wird und bei dem eine Strömung des Heizkreismediums mit einem Ventil (4.1) im Rücklauf- (2.1) und mit einem Ventil (4.2) im Vorlaufzweig (2.2) unterbrochen werden kann, **dadurch gekennzeichnet,**
**dass** die beiden Ventile (4.1, 4.2) geschlossen werden, wenn im Heizkreis (2) mit dem Drucksensor (3) ein oberhalb eines vorgegebenen Schwellwertes liegender Druck des Heizkreismediums gemessen wird.

2. Verfahren nach Anspruch 1,
**dadurch gekennzeichnet,**
**dass** bereits eine kurzzeitige, den Schwellwert erreichende Druckspitze im Heizkreis (2) dazu führt, dass die Ventile (4.1, 4.2) geschlossen werden.

3. Verfahren nach Anspruch 1 oder 2,
**dadurch gekennzeichnet,**
**dass** die beiden Ventile (4.1, 4.2) geschlossen werden, wenn der mit dem Drucksensor (3) gemessene Schwellwert größer als 4 bar ist.

4. Verfahren nach einem der Ansprüche 1 bis 3,
**dadurch gekennzeichnet,**
**dass** die beiden Ventile (4.1, 4.2), sobald sie verschlossen sind, von selbst und stromlos geschlossen bleiben.

5. Verfahren nach einem der Ansprüche 1 bis 4,
**dadurch gekennzeichnet,**
**dass** zum Abbau eines Überdrucks im Heizkreis (2) mindestens ein Sicherheitsventil (5) verwendet wird.

6. Verfahren nach Anspruch 5,
**dadurch gekennzeichnet,**
**dass** das Sicherheitsventil (5) bei einem länger anhaltenden Druck von über 3 bar öffnet.

7. Verfahren nach Anspruch 5 oder 6,
**dadurch gekennzeichnet,**
**dass** das Sicherheitsventil (5) außerhalb des Gebäudes betrieben wird.

8. Verfahren nach einem der Ansprüche 5 bis 7,
**dadurch gekennzeichnet,**
**dass** die Ventile (4.1, 4.2) bereits auf eine Druckspitze im Heizkreis (2) reagieren, das Sicherheitsventil (5) aber erst auf eine länger anhaltende Druckveränderung im Heizkreis (2) reagiert.

9. Verfahren nach einem der Ansprüche 1 bis 8,
**dadurch gekennzeichnet,**
**dass** die Primärseite (1.1) des Wärmeübertragers (1) bei Betrieb der Wärmepumpe vom Kältemittel mit einem Druck von mindestens 5 bar durchströmt wird.

10. Verfahren nach einem der Ansprüche 1 bis 9,
**dadurch gekennzeichnet,**
**dass** die Sekundärseite (1.2) des Wärmeübertragers (1) bei Betrieb der Wärmepumpe vom Heizkreismedium mit einem Druck unter 3 bar durchströmt wird.
